# FASCICULE DE BREVET EUROPEEN

(11) **EP 0 926 657 B1**
(45) Date de publication et mention de la délivrance du brevet: **06.11.2002**
(21) Numéro de dépôt: 98403156.7
(22) Date de dépôt: 15.12.1998
(51) Int. Cl.: G10K 11/178, G01S 3/86

(54) **Procédé et dispositif de détection acoustique en présence de source de bruit parasite à faible rapport signal sur bruit**
Verfahren und Vorrichtung zum akustischem Nachweiss eines Signals mit niedrigem Signal-Rauschabstand bei zusätzlicher Anwesenheit einer Rauschquelle
Method and apparatus for acoustic detection of a signal with a low signal-to-noise ratio, in the presence of a noise source

(30) Priorité: 17.12.1997 FR 9715985
(43) Date de publication de la demande: 30.06.1999
(73) Titulaire: ETAT FRANCAIS Représenté par le Délégué Général pour l'Armement, 00460 Armées (FR)
(72) Inventeur: Giangreco, Christian, 83740 - LA CADIERE D'AZUR (FR); Gargouri, Yacine, 75014 Paris (FR); Wagstaff, Peter, 75017 Paris (FR)

(56) Documents cités:
- EP-A- 0 394 582
- WO-A-90/10926
- DE-A- 3 520 398
- US-A- 4 594 695
- PATENT ABSTRACTS OF JAPAN vol. 015, no. 102 (E-1043), 12 mars 1991 -& JP 02 309899 A (NEC CORP), 25 décembre 1990
- PATENT ABSTRACTS OF JAPAN vol. 006, no. 221 (P-153), 5 novembre 1982 -& JP 57 124267 A (OKI DENKI KOGYO KK), 3 août 1982
- PATENT ABSTRACTS OF JAPAN vol. 017, no. 307 (E-1379), 11 juin 1993 -& JP 05 022789 A (NEC CORP), 29 janvier 1993
- PATENT ABSTRACTS OF JAPAN vol. 014, no. 392 (P-1096), 23 août 1990 -& JP 02 147978 A (NEC CORP), 6 juin 1990

## Description

La présente invention a pour objet des procédés et dispositifs de détection acoustique en présence de sources de bruits parasites.

Le secteur technique de l'invention est celui des dispositifs de protection contre les bruits et autres ondes acoustiques.

L'application principale de l'invention est de permettre une meilleure identification et localisation des sources acoustiques inconnues, principalement dans le domaine de l'acoustique sous-marine. Dans ce domaine les antennes utilisées actuellement sont formées par un réseau de capteurs (hydrophones) sensibles aux variations de pression acoustique et qui sont installés sur des navires porteurs, qui sont des bâtiments de surface ou des sous-marins. Le fonctionnement de ces derniers induit cependant des bruits parasites qui sont perçus par les dites antennes et dont les principales sources sont : les machines tournantes qui induisent des vibrations qui se propagent le long de la coque, le bruit d'écoulement de l'eau le long de la coque et le bruit de propulsion engendré par les hélices et qui s'achemine à la fois par les voies fluides dans l'eau et les voies solides par la coque.

Les dits bruits parasites peuvent alors être suffisamment importants pour empêcher la détection par les dites antennes de sources acoustiques externes que l'on veut pourtant pouvoir détecter. Ainsi à ce jour, on essaye d'isoler de ces bruits parasites les antennes en plaçant essentiellement d'une part des plots anti-vibration entre la coque et l'antenne pour diminuer la transmission des vibrations et d'autre part une barrière acoustique entre la coque et l'antenne. De plus les enrobages en élastomère et la taille des hydrophones sont choisis pour filtrer la propagation du bruit d'écoulement en particulier pour les antennes de flanc. Pour les antennes de coque situées dans les cavités du sonar, les dômes de protection sont étudiés pour réduire les bruits dus à l'écoulement.

Des dispositifs complémentaires actifs sont également utilisés tels que celui décrit dans la demande de brevet WO901926 et enseignant des procédés et des dispositifs de réduction de l'émission du bruit de sous-marin immergé grâce à la mise en mouvement contrôlé d'une double coque entourant la source de bruit, tel que le moteur de propulsion, afin d'imposer à cette double coque un mouvement en opposition à celui créé par la dite source de bruit, ce qui permet théoriquement d'annuler les effets de vibration vers l'extérieur de la coque.

Cependant, tous ces procédés et dispositifs utilisés à ce jour sont inefficaces soit en basses fréquences en particulier en dessous de 100 Hz, soit quand la source externe de bruit que l'on veut détecter émet dans une fréquence identique ou proche de celle d'une des sources parasites.

Le problème posé est donc d'améliorer l'efficacité de l'isolation d'une antenne ou de tout récepteur de relevé et de mesure acoustique, par rapport à tout bruit ou vibration en provenance de source connue, telle que celles générées par le véhicule porteur de l'antenne et qui dans l'application principale de l'invention est un navire, et cela surtout en basses fréquences.

Une solution au problème posé est un procédé de détection acoustique en présence de source de bruits parasites et utilisant au moins une antenne de réception et de mesures de pression acoustiques associé à une unité de traitement du signal ainsi relevé par cette antenne tel que :
- on place au moins un capteur de vibration ou acoustique ou de mesure de contrainte mécanique (dans le reste de la description on ne citera essentiellement que les capteurs de vibration en considérant que ce terme couvre en fait tout autre capteur qu'il soit de type acoustique ou de mesure de contrainte mécanique ou autre) directement sur au moins une des dites sources de bruit dont on relève ainsi le signal parasite dès son origine et pris alors comme signal de référence,
- on enlève la partie du signal relevé par l'antenne, et qui est corrélée avec le dit signal parasite de référence,
- on associe le support du dit antenne à un système dynamique de contrôle de mouvement et on mesure les vibrations du support de l'antenne par tout capteur d'erreur solidaire de celui-ci,
- on pilote le dit système dynamique de telle façon que le signal relevé par le capteur d'erreur soit minimum,
- on détermine alors les caractéristiques de toute autre source éventuelle acoustique non connue.

Dans un mode préférentiel de réalisation :
- on place au moins un capteur de vibration directement sur au moins une des dites sources de bruit,
- on fixe sur le dit support ladit antenne des actuateurs tels que des éléments piézo-électriques, ou électrodynamiques, ou électrostrictifs ou autres, que l'on pilote par le dit signal parasite de référence de la source de bruit connue de telle façon que les effets de rayonnement acoustique en champ proche de celle-ci sur le support de l'antenne soient minimum.

Dans l'application principale de l'invention, on installe ladite antenne de réception de mesure acoustique sur la coque d'un navire qui porte les dites sources de bruits parasites et on place au moins un capteur de référence, qui peut être alors un hydrophone, proche des hélices de propulsion du navire et au moins un autre à l'intérieur de la coque sur toute structure pouvant être une source de vibration.

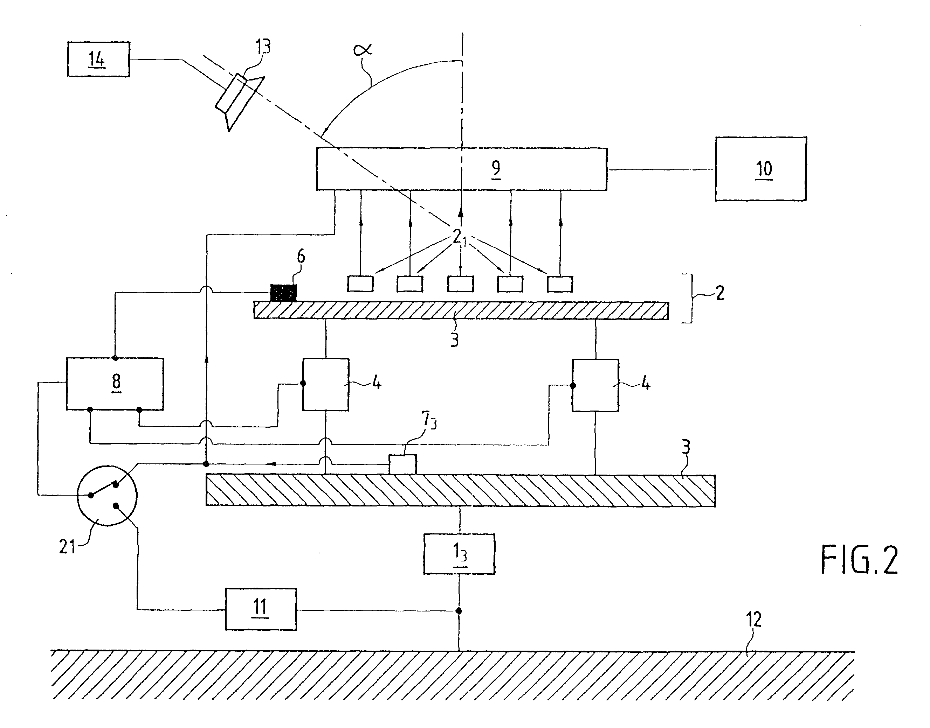

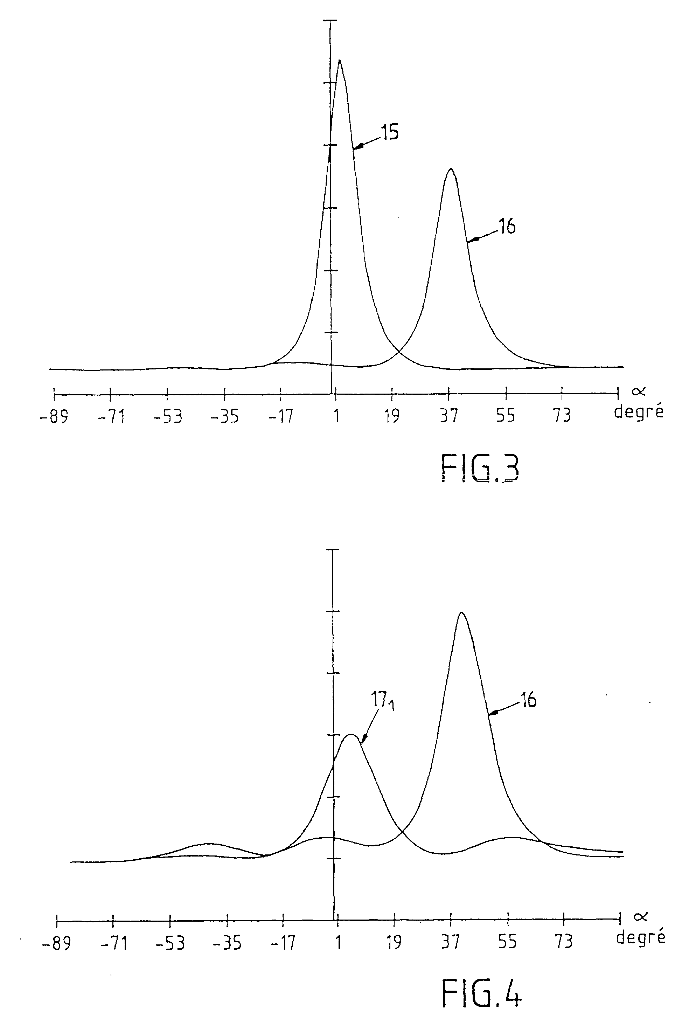

Le résultat est de nouveaux procédés ainsi que tout dispositif permettant de réaliser le dit procédé, et tel que décrit ci-après, pour la détection acoustique, en particulier sous-marine, de source de bruit inconnu, en présence de source de bruit parasite, et qui permettent d'atteindre les objectifs définis par le problème posé. Des expériences ont démontré la faisabilité d'un tel procédé suivant l'invention, en utilisant un dispositif tel que décrit dans la figure 2 et suivant les résultats représentés sur les figures 3 à 6, surtout lorsque l'on combine à la fois la méthode de conditionnement du signal suivant l'invention, et celle du contrôle actif du mouvement du support du récepteur ou de l'antenne.

De plus, en diminuant les vibrations du dit support de l'antenne grâce au dit contrôle actif, on peut rendre celui-ci plus réflecteur en contrôlant les vibrations qui sont corrélées avec les signaux en provenance de la source extérieure acoustique : on augmente ainsi le rapport signal à bruit, permettant un meilleur relevé de mesure et un meilleur traitement du signal ainsi relevé, pour permettre de caractériser et de localiser la source extérieure éventuelle acoustique non connue.

On pourrait citer d'autres avantages de la présente invention mais ceux cités ci-dessus en montrent déjà suffisamment pour en prouver la nouveauté et l'intérêt. La description et les figures ci-après représentent des exemples de réalisation de l'invention mais n'ont aucun caractère limitatif : d'autres réalisations sont possibles dans le cadre de la portée de l'étendue de l'invention, en particulier, en changeant le type de capteurs de référence et les sources de bruits parasites.

La figure 1 est une vue en coupe schématique d'un dispositif de détection suivant l'invention installé sur et dans une coque de navire.

La figure 2 est un schéma d'installation réalisée lors d'une expérience effectuée en milieu aérien suivant le procédé de l'invention.

Les figures 3 à 6 sont des courbes représentatives des résultats de mesures relevées avec le dispositif de la figure 2 et suivants différentes configurations de détection et de traitement des signaux de bruit.

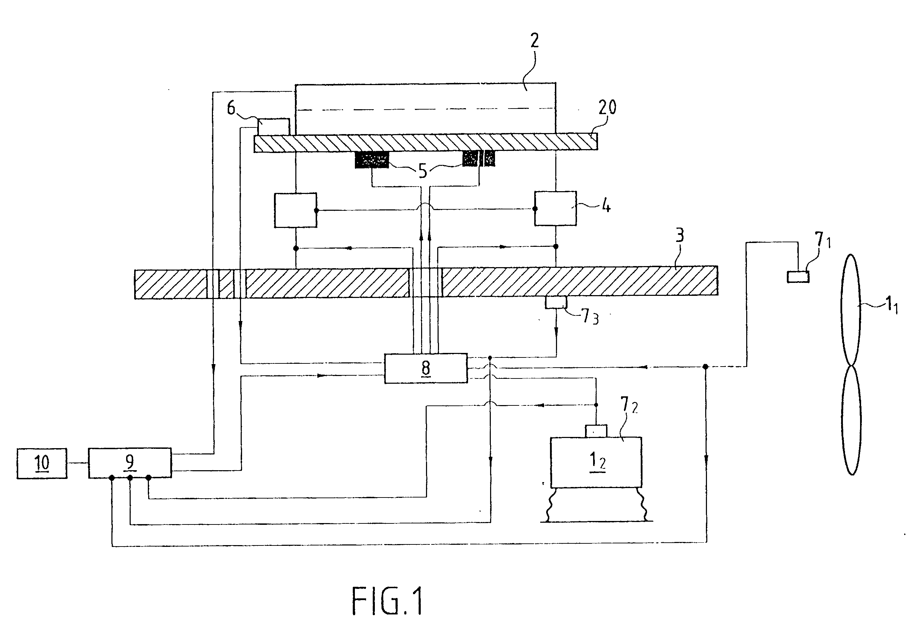

Les dispositifs de détection acoustique représentés sur les figures 1 et 2 comprennent au moins une antenne réceptrice 2, qui est dans l'exemple de la figure 1 une antenne de sonar, et dans l'exemple de la figure 2 une antenne linéaire composée de capteurs microphoniques 2₁ placés sur une plaque mince 3, pour effectuer tout relevé et mesure acoustique, et associé à une unité 10 de traitement du signal ainsi relevé par l'antenne 2.

Selon l'invention le dispositif de détection comprend au moins :
- un capteur de vibration ou acoustique ou de mesure de bruit 7₁ placé directement sur au moins une des dites sources de bruit, qui peut être l'hélice 1₁ du navire, une machine 1₂ située dans la coque 3 du dit navire, la coque 3 elle-même de celui-ci etc ; pour ce ou ces capteurs, on relève le ou les signaux considérés parasites, dès l'origine de son ou leur émission et pris alors comme signaux de référence ; ces dits signaux sont alors soustraits 9 du signal relevé par l'antenne 2 avant qu'il soit traité 10 pour déterminer les caractéristiques de toute autre source éventuelle acoustique non connue ; pour cela, les signaux de bruits et de vibrations relevés par l'antenne 2 ainsi que ceux relevés par les différents capteurs de référence 7 sont conditionnés par tout traitement 9 connu, tel que par exemple : par calcul de pré-traitement sur la matrice interspectral des capteurs qui composent la dite antenne ou récepteur 2, et utilisant des fonctions de transfert entre les différentes sources de bruit connues 1 et les différents capteurs composant la dite antenne 2, avec la connaissance des autospectres et des interspectres des dites sources de bruit connues et des capteurs de l'antenne 2 (on pourra se reporter utilement à titre d'exemple pour ce type de calcul à la publication intitulée "Localisation of correlated noise sources with selective linear arrays" de Messieurs GARGOURY et WAGSTAFF publiée dans la revue INTERNOISE proceeding p. 26-33 du 30/07 au 02/08/96). Ce procédé de calcul peut être effectué dans le domaine fréquenciel ou dans le domaine temporel et le conditionnement du signal suivant l'invention consiste à enlever la partie du signal de chaque capteur de l'antenne ou récepteur 2 qui est corrélée avec les signaux de tous les capteurs 7 de référence des sources perturbatrices 1 ;
- un système 8 de contrôle actif de mouvement du support 20 de l'antenne 2 associé au moins à un capteur d'erreur 6 solidaire de celui-ci et comprenant au moins un capteur de vibration ou acoustique (7₁, 7₂ ou 7₃) d'une source connue de bruit parasite perturbatrice 1₂ et des plots actifs de contrôle 4 des mouvements du support 20 de l'antenne réceptrice 2 ; le dit système 8 de contrôle actif comprenant au moins également un microprocesseur pour le traitement des divers signaux reçus et la transmission des différents ordres de commande aux différents plots actifs 4 suivants des programmes pré-définis ; les plots actifs 4 peuvent être constitués par des systèmes électrodynamiques ou piézo-électriques ou magnétostrictifs placés en série ou être intégrés dans des plots anti-vibration reliant le support 20 d'antenne 2 à la coque 3 du navire suivant la figure 1 ou à la structure 3 représentative de la dite coque telle que représentée sur la figure 2.

Dans la représentation de la figure 1, les capteurs de référence 7 peuvent être des accéléromètres, des jauges de contrainte, ou d'autres capteurs vibratoires placés sur des machines 1₂ ou sur la coque 3, ou des hydrophones 7₁ placés près des ou de l'hélice de propulsion 1₁, ou tout autre capteur spécifique placé dans l'écoulement responsable du bruit hydrodynamique pour mesurer ce dernier, en particulier sensible au contrainte de cisaillement.

De plus le dispositif de détection suivant l'invention peut comprendre au moins un autre capteur de vibration 7₃ placé directement sur au moins une des dites sources de bruit, et des actuateurs 5 fixés au dit support 20 de l'antenne 2 et pilotés par le dit système de contrôle actif 8.

De préférence, certains des capteurs de vibration 7 de référence sont communs à la fois au système de traitement du signal 9,10 et au système de contrôle actif 8.

Dans le dit système de contrôle actif 8, les plots actifs 4 sont utilisés pour contrôler la transmission vibratoire depuis la coque 3 et les actuateurs 5 réduisent les effets de rayonnement acoustique en champ proche venant de la coque sur l'antenne 2. Le système 8 dynamique de contrôle est programmé à l'aide d'algorithmes spécifiques destinés à calculer à partir des mesures relevées par le capteur d'erreur 6 et des résultats du traitement des signaux reçus par l'antenne 2, les signaux d'ordre à envoyer sur les plots actifs 4 et sur les actuateurs 5 pour diminuer le niveau des vibrations du support 20.

La dite programmation du système de contrôle peut être basée sur différents types d'algorithmes connus tel que celui décrit dans le "Journal Of Sound and Vibration" (1995) suivant l'article de Messieurs VIPPERMAN et FULLER intitulé "Active control of broadband structural vibration using LMS adaptative algorithm".

Dans l'expérience représentée suivant le dispositif de la figure 2, les vibrations parasites connues sont engendrées directement sur la structure 3 représentant la coque, par un pot vibrant 1₃ alimenté par un générateur de signal 11 de fréquence harmonique à travers un amplificateur de puissance : le signal de référence de vibration ou de bruit parasite qui doit être envoyé au système de contrôle actif 8 est obtenu par l'intermédiaire d'un interrupteur 21 soit directement du générateur 11, soit à l'aide d'un accéléromètre 7₃ placé sur la structure 3 représentative de la coque. La source acoustique extérieure "non connue" que l'on veut détecter est un haut parleur 13 alimenté par un générateur de bruit 14 en bruit large bande placé à quelques mètres de l'antenne 2 et faisant un angle α par rapport à l'axe de celle-ci. Les capteurs d'erreur sont deux accéléromètres 6 placés à proximité des points d'attache des plots actifs 4 sur le support 3 de l'antenne 2 et l'ensemble est posé sur un support de référence fixe 12. Grâce à une telle installation on a pu ainsi relever différentes mesures et effectuer différents traitements de signaux avec deux sources d'excitation de même bande de fréquence, autour de 590 Hz, une desdites deux sources correspondant au bruit propre créé par la mise en vibration de la structure 3 (et représenté seul par la courbe 15 de la figure 3), et une autre correspondant à la source du bruit externe 13 (et représenté seul par la courbe 16 de la figure 3). Les dites courbes de toutes les figures 3 à 6 représentent les signaux relevés par l'antenne 2 après traitement 10 et avec ou sans conditionnement 10.

Suivant la figure 4 où il est représenté à nouveau la courbe 16 de la source 13 de bruit externe sans la mise en route de la source de bruit parasite 1₃ comme sur la figure 3, les courbes 17₁ représentent les signaux relevés, quand en plus de la source externe, on met en route la source de bruit parasite 1₃ à différents niveaux de rapport signal à bruit -6 à -12 db, et avec la seule mise en route du système de contrôle actif 8 seul : on voit ainsi que l'on ne peut donc pas identifier la source 13, quand elle est dans la même bande de fréquence que le bruit parasite et lorsque le bruit parasite est supérieur à celui de la source que l'on veut détecter, ce qui constitue, bien sûr, des conditions extrêmes.

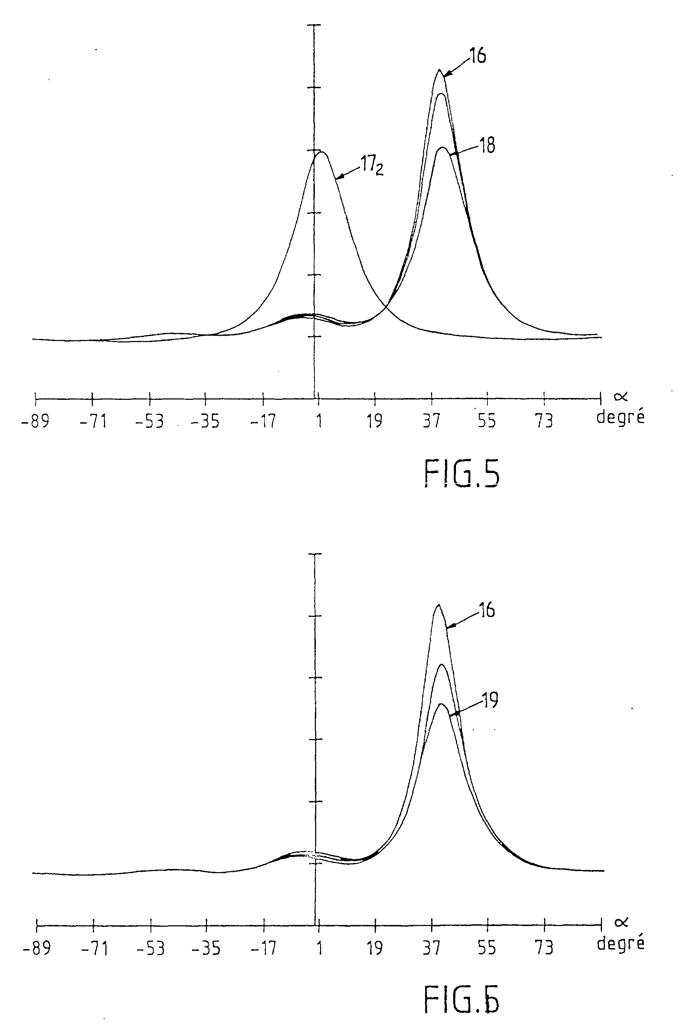

Sur la figure 5, où est représenté toujours la même courbe 16 de référence, il est représenté d'autres courbes de signaux relevés toujours par l'antenne 2 et avec la mise en route de la même source de bruit 1₃ et l'utilisation du seul procédé de conditionnement de signal suivant l'invention : on relève que pour des bruits à -6 à -9,5 db, on obtient des courbes de signaux 18 permettant d'identifier la source de bruit externe 13, alors que pour un bruit à 12 db la courbe 17₂ montre que l'on ne peut pas.

Suivant la figure 6 pour laquelle l'ensemble des phases du procédé suivant l'invention est mis en route, à savoir la système de contrôle actif 8 et le procédé de conditionnement du signal, on relève des courbes de signaux 19 toujours après traitement bien sur, permettant d'identifier la source "inconnue" 13 quelque soit le niveau de bruit parasite de 6 à 12 db.

Ces courbes montrent ainsi l'intérêt de combiner les deux techniques surtout lorsque le rapport signal à bruit diminue, mais le procédé de conditionnement seul peut suffire lorsque ce rapport n'est pas trop faible. Ce procédé a été appliqué dans le domaine fréquenciel pour le traitement, mais il pourrait être également effectué dans le domaine temporel.

## Revendications

1. Procédé de détection acoustique, principalement dans le domaine de l'acoustique sous-marine, en présence de sources (1, 3) de bruits parasites de rapports signal à bruit faible, et utilisant au moins une antenne de mesure de pressions acoustiques associées à une unité (10) de traitement du signal **caractérisé en ce que** :
- on place au moins un capteur de vibration acoustique ou de mesure de contrainte mécanique (7₁) directement sur au moins une des dites sources de bruit (1₁) dont on relève ainsi le signal parasite dès son origine et qui est alors pris comme signal de référence,
- on enlève (9) la partie du signal relevé par l'antenne (2) qui est corrélée avec ledit signal parasite de référence,
- on associe le support (20), entre la coque d'un navire et l'antenne (2), à un système (4, 5, 8) dynamique de contrôle de mouvement, et on mesure les vibrations du support de l'antenne (2) par tout capteur d'erreur (6) solidaire de celui-ci, ledit système comprenant au moins un capteur de vibration (7₂) de source connue de bruit parasite (1₂),
- on pilote (8) ledit système dynamique (4, 5) de telle façon que le signal relevé par le capteur d'erreur (6) soit minimum,
- on détermine alors (10) les caractéristiques de toute autre source extérieure éventuellement acoustique non connue.

2. Procédé de détection suivant la revendication 1, **caractérisé en ce que** :
- on place au moins un capteur de vibration (7₃) directement sur au moins une des dites sources de bruit (3),
- on fixe sur le dit support (20) de la dite antenne (2) des actuateurs (5) que l'on pilote (8) par le dit signal parasite de référence de la source (3) de bruit mesurée, de telle façon que les effets de rayonnement acoustique en champ proche de celle-ci sur le support (20) de l'antenne (2) soient minimum.

3. Procédé de détection suivant l'une quelconque des revendications 1 ou 2, **caractérisé en ce qu'**en diminuant les vibrations du support (20) de l'antenne (2) on rend celui-ci plus réflecteur en contrôlant les vibrations qui sont corrélées avec les signaux en provenance de la source acoustique extérieure et on augmente ainsi le rapport signal à bruit.

4. Procédé de détection suivant l'une quelconque des revendications 1 à 3, **caractérisé en ce qu'**on isole la coque (3) du navire du support (20) de ladite antenne (2) de mesure acoustique, par des plots anti-vibrateurs associés à des plots actifs (4).

5. Procédé de détection acoustique sous-marine suivant la revendication 4, **caractérisé en ce qu'**on place au moins un capteur (7₁) de référence, qui est un hydrophone, proche des hélices de propulsion (1₁) du navire et au moins un autre (7₃) à l'intérieur de la coque (3) sur toute structure pouvant être une source de vibration.

6. Dispositif de détection acoustique, principalement dans le domaine de l'acoustique sous-marine, en présence de sources connues (1, 3) de bruits parasites à faible rapport signal à bruit et comprenant une antenne (2) de mesure acoustique associée à une unité (10) de traitement du signal, **caractérisé en ce qu'**il comprend :
- au moins un capteur de vibration acoustique ou de mesure de contrainte (7₁) placé directement sur au moins une desdites sources de bruit (1₁) et qui en relève le signal considéré parasite et de référence, pour le soustraire (9) par une unité de conditionnement, du signal relevé par l'antenne (2) avant qu'il soit traité pour déterminer les caractéristiques de toute autre source éventuelle acoustique non connue,
- et un système (8) de contrôle actif de mouvement du support (20), entre la coque d'un navire et l'antenne (2), associé à au moins un capteur d'erreur (6) solidaire de celui-ci, ledit système comprenant au moins un capteur de vibration (7₂) de source connue de bruit parasite (1₂) et des plots actifs (4) de contrôle des mouvements du support (20) de l'antenne (2) pour rendre ces mouvements minimum, de telle façon que le signal relevé par le capteur d'erreur (6) soit minimum.

7. Dispositif de détection suivant la revendication 6, **caractérisé en ce qu'**il comprend des actuateurs (5) fixés au dit support (20) de l'antenne (2) et pilotés par le dit système de contrôle (8) actif.

8. Dispositif de détection suivant l'une quelconque des revendications 6 ou 7 **caractérisé en ce que** certains des capteurs de vibrations (7) de référence sont communs à la fois au système de traitement de signal (9, 10) et au système de contrôle actif (8).

9. Dispositif de détection acoustique sous-marine suivant l'une quelconque des revendications 6 à 8 **caractérisé en ce qu'**un des capteurs de référence (7) est un hydrophone très proche des hélices de propulsion (1₁) du navire portant ladite antenne (2) de mesure acoustique et les dites sources (1) de bruits parasites.

10. Dispositif de détection acoustique sous-marine suivant l'une quelconque des revendications 6 à 9 **caractérisé en ce qu'**un des capteurs de référence (7) est un capteur de bruit d'écoulement.

## Patentansprüche

1. Verfahren zur Schallerfassung, hauptsächlich im Bereich der Unterseeakustik, in Gegenwart von Störgeräuschquellen (1, 3) mit geringen Rauschabständen, und unter Verwendung von mindestens einer Antenne zum Messen von Schalldrücken, die mit einer Einheit (10) zur Verarbeitung des Signals verbunden ist, **dadurch gekennzeichnet, daß**:
- man zumindest einen Sensor für eine Schallschwingung oder zum Messen einer mechanischen Beanspruchung (7₁) direkt an mindestens einer der Geräuschquellen (1₁) anordnet, von welchen man so das Störsignal schon an seinem Ursprung feststellt und das dann als Bezugssignal genommen wird,
- man den Teil des von der Antenne (2) georteten Signals beseitigt (9), der mit dem Bezugsstörsignal korreliert ist,
- man den Träger (20) zwischen dem Rumpf eines Schiffs und der Antenne (2) mit einem dynamischen Bewegungskontrollsystem (4, 5, 8) verbindet und man die Schwingungen des Trägers der Antenne (2) durch jeden Fehlersensor (6), der mit diesem verbunden ist, mißt, wobei das System mindestens einen Schwingungssensor (7₂) für eine bekannte Störgeräuschquelle (1₂) umfaßt,
- man das dynamische System (4, 5) derart steuert (8), daß das vom Fehlersensor (6) festgestellte Signal minimal ist,
- man dann die Eigenschaften jeder anderen unbekannten, äußeren, möglicherweise akustischen Quelle bestimmt (10).

2. Erfassungsverfahren nach Anspruch 1, **dadurch gekennzeichnet, daß**:
- man zumindest einen Schwingungssensor (7₃) direkt an mindestens einer der Geräuschquellen (3) anordnet,
- man an dem Träger (20) der Antenne (2) Stellantriebe (5) befestigt, die man durch das Bezugsstörsignal der Quelle (3) des gemessenen Geräuschs derart steuert (8), daß die Wirkungen der Schallstrahlung im Nahfeld von dieser auf den Träger (20) der Antenne (2) minimal sind.

3. Erfassungsverfahren nach einem der Ansprüche 1 oder 2, **dadurch gekennzeichnet, daß** durch Verringern der Schwingungen des Trägers (20) der Antenne (2) man diesen reflektierender macht, indem die Schwingungen, die mit den Signalen korreliert sind, die von der äußeren Schallquelle stammen, kontrolliert werden, und man so den Rauschabstand erhöht.

4. Erfassungsverfahren nach einem der Ansprüche 1 bis 3, **dadurch gekennzeichnet, daß** man den Rumpf (3) des Schiffs vom Träger (20) der Antenne (2) zur Schallmessung durch Antischwingungsblöcke, die mit aktiven Blöcken (4) verbunden sind, isoliert.

5. Verfahren zur Untersee-Schallerfassung nach Anspruch 4, **dadurch gekennzeichnet, daß** man mindestens einen Bezugssensor (7₁), der ein Hydrophon ist, nahe den Antriebsschrauben (1₁) des Schiffs und mindestens einen weiteren (7₃) im Inneren des Schiffsrumpfs (3) auf jeglicher Struktur, die eine Schwingungsquelle sein kann, anordnet.

6. Vorrichtung zur Schallerfassung, hauptsächlich im Bereich der Untersee-Akustik, in Gegenwart von bekannten Störgeräuschquellen (1, 3) mit geringem Rauschabstand und mit einer Antenne (2) zur Schallmessung, die mit einer Einheit (10) zur Verarbeitung des Signals verbunden ist, **dadurch gekennzeichnet, daß** sie folgendes umfaßt:
- mindestens einen Sensor für eine Schallschwingung oder zur Messung einer Beanspruchung (7₁), der direkt an mindestens einer der Geräuschquellen (1₁) angeordnet ist, und der daraus das als störend betrachtete Bezugssignal feststellt, um es durch eine Aufbereitungseinheit von dem von der Antenne (2) georteten Signal zu subtrahieren (9), bevor es verarbeitet wird, um die Eigenschaften jeglicher anderen unbekannten, möglicherweise akustischen Quelle zu bestimmen,
- und ein System (8) zur aktiven Kontrolle der Bewegung des Trägers (20) zwischen dem Rumpf eines Schiffs und der Antenne (2), das mit mindestens einem Fehlersensor (6) verbunden ist, der mit diesem verbunden ist, wobei das System mindestens einen Schwingungssensor (7₂) für eine bekannte Störgeräuschquelle (1₂) und aktive Blöcke (4) zur Kontrolle der Bewegungen des Trägers (20) der Antenne (2) umfaßt, um diese Bewegungen minimal zu machen, derart, daß das vom Fehlersensor (6) festgestellte Signal minimal ist.

7. Erfassungsvorrichtung nach Anspruch 6, **dadurch gekennzeichnet, daß** sie Stellantriebe (5) umfaßt, die am Träger (20) der Antenne (2) befestigt sind und von dem aktiven Kontrollsystem (8) gesteuert werden.

8. Erfassungsvorrichtung nach einem der Ansprüche 6 oder 7, **dadurch gekennzeichnet, daß** bestimmte der Bezugsschwingungssensoren (7) gleichzeitig für das System zur Verarbeitung des Signals (9, 10) und für das aktive Kontrollsystem (8) gemeinsam sind.

9. Untersee-Schallerfassungsvorrichtung nach einem der Ansprüche 6 bis 8, **dadurch gekennzeichnet, daß** einer der Bezugssensoren (7) ein Hydrophon ist, das sehr nahe bei den Antriebsschrauben (1₁) des Schiffs liegt, welches die Antenne (2) zur Schallmessung und die Störgeräuschquellen (1) trägt.

10. Untersee-Schallerfassungsvorrichtung nach einem der Ansprüche 6 bis 9, **dadurch gekennzeichnet, daß** einer der Bezugssensoren (7) ein Strömungsgeräuschsensor ist.

## Claims

1. Acoustic detection method, mainly in the field of underwater acoustics, in the presence of sources (1, 3) of interference with low signal to noise ratios, and using at least one antenna for measurement of acoustic pressures associated with a unit (10) for processing of the signal, **characterised in that**:
- at least one vibration, acoustic or mechanical stress measurement sensor (7₁) is placed directly on at least one of the said noise sources (1₁), the interference signal of which is thus detected at its origin, and is then taken as a reference signal;
- the part of the signal detected by the antenna (2) is removed (9), and is correlated to the said interference reference signal;
- the support (20) is associated, between the hull of a vessel and the antenna (2), with a dynamic system (4, 5, 8) for control of movement, and the vibrations of the support of the antenna (2) are measured by any error sensor (6) which is integral therewith, the said system comprising at least one vibration sensor (7₂) for a known source of interference (1₂) ;
- the said dynamic system (4, 5) is controlled (8) such that the signal detected by the error sensor (6) is minimal; and
- the characteristics of any other unknown acoustic source are then determined (10).

2. Detection method according to claim 1, **characterised in that**:
- at least one vibration sensor (7₃) is placed directly on at least one of the said noise sources (3); and
- there are secured to the said support (20) of the said antenna (2) actuators (5) which are controlled (8) by the said interference reference signal of the noise source (3), measured such that the effects of acoustic radiation in a field close to this source on the support (20) of the antenna (2) are minimal.

3. Detection method according to claim 1 or 2, **characterised in that**, by decreasing the vibrations of the support (20) of the antenna (2), the support is made more reflective, by controlling the vibrations which are correlated to the signals obtained from the external acoustic source, and the signal to noise ratio is thus increased.

4. Detection method according to any one of claims 1 to 3, **characterised in that** the hull (3) of the vessel is insulated from the support (20) of the said antenna (2) for acoustic measurement, by anti-vibration blocks which are associated with active contact blocks (4).

5. Underwater acoustic detection method according to claim 4, **characterised in that** at least one reference sensor (7₁), which is a hydrophone, is placed close to the propeller (1₁) of the vessel, and at least one other sensor (7₃) is placed inside the hull (3), on any other structure which may be a source of vibration.

6. Acoustic detection arrangement, mainly in the field of underwater acoustics, in the presence of known interference sources (1, 3) with a low signal to noise ratio, and comprising at least one antenna (2) for acoustic measurement, associated with a unit (10) for processing of the signal, **characterised in that** it comprises:
- at least one vibration, acoustic or stress measurement sensor (7₁), which is placed directly on at least one of the said noise sources (1₁), and detects the signal considered to be interfering and is the reference, in order to have the signal subtracted (9), by a conditioning unit, from the signal detected by the antenna (2), before it is processed for determining the characteristics of any other unknown acoustic source;
- and a system (8) for active control of movement of the support (20), between the hull of a vessel and the antenna (2), which is associated with at least one error sensor (6) which is integral therewith, the said system comprising at least one vibration sensor (7₂) for a known source of interference (1₂), and active contact blocks (4) for controlling the movements of the support (20) of the antenna (2), in order to make these movements minimal, such that the signal detected by the error sensor (6) is minimal.

7. Detection arrangement according to claim 6, **characterised in that** it comprises actuators (5), which are secured to the said support (20) of the antenna (2), and are controlled by the said active control system (8).

8. Detection arrangement according to claim 6 or 7, **characterised in that** some of the reference vibration sensors (7) are common both to the system for processing of the signal (9, 10), and to the system (8) for active control.

9. Underwater acoustic detection arrangement according to any one of claims 6 to 8, **characterised in that** one of the reference sensors (7) is a hydrophone, which is very close to the propellers (1₁) of the vessel which carries the said antenna (2) for acoustic measurement and the said interference sources (1).

10. Underwater acoustic detection arrangement according to any one of claims 6 to 9, **characterised in that** one of the reference sensors (7) is a flow noise sensor.
